# EUROPÄISCHE PATENTSCHRIFT

(11) **EP 1 008 470 B1**
(45) Veröffentlichungstag und Bekanntmachung des Hinweises auf die Patenterteilung: **31.03.2004**
(21) Anmeldenummer: 99121932.0
(22) Anmeldetag: 08.11.1999
(51) Int. Cl.: B60H 1/00, B29C 45/44

(54) **Dichtungsanordnung für eine Wandöffnung, Werkzeug zur Herstellung eines Dichtungsbandes und Verfahren zur Einbringung einer Dichtung**
Sealing device for an opening in a panel, tool for making a sealing band and method for fitting a sealing device
Dispositif d'étanchéité pour une ouverture dans un panneau, outil de travail pour la fabrication d'une bande d'étanchéité et procédé d'installation d'un joint d'étanchéité

(30) Priorität: 10.12.1998 DE 19857077
(43) Veröffentlichungstag der Anmeldung: 14.06.2000
(73) Patentinhaber: Volkswagen Aktiengesellschaft, 38436 Wolfsburg (DE)
(72) Erfinder: Hustede, Rik, 38106 Braunschweig (DE); Schnute, Harald, 38108 Braunschweig (DE)

(56) Entgegenhaltungen:
- EP-A- 0 245 894
- DE-U- 29 807 815
- GB-A- 2 264 987
- PATENT ABSTRACTS OF JAPAN vol. 016, no. 503 (M-1326), 16. Oktober 1992 (1992-10-16) & JP 04 185309 A (DAIKYO INC), 2. Juli 1992 (1992-07-02)

## Beschreibung

Die Erfindung betrifft eine Dichtungsanordnung nach dem Oberbegriff des Anspruchs 1, ein Werkzeug zur Herstellung eines Dichtungsbandes nach dem Oberbegriff des Anspruchs 11 und ein Verfahren zur Einbringung eines Dichtungsbandes nach Anspruch 12.

Es ist im Fahrzeugbau allgemein bekannt an eine in einer Karosseriewand ausgebildete Wandöffnung an den gegenüberliegenden Wandseiten Funktionsteile mit einer entsprechend zugeordneten Funktionsteilöffnung anzuschließen, um so eine Verbindung, z. B. eine Luftverbindung, zwischen den einzelnen Bauteilen herzustellen. Um in den Anschlußbereichen der Funktionsteile an die Karosseriewand die Bauteile gegeneinander bzw. gegen die Umwelt abzudichten, werden diese Funktionsteile mittels wenigstens einer Dichtung im Öffnungsbereich der Karosseriewand angeschlossen.

Ein konkretes Beispiel für eine derartige Anordnung findet sich im Fahrzeugbau z. B. in Verbindung mit dem Einbau von Klima- und/oder Heizgeräten und/oder Pollenfiltergehäusen. Hierfür wird in einer Spritzwand einer Karosserie eine Lufteintrittsöffnung ausgebildet. Bei einigen Fahrzeugtypen befindet sich diese Lufteintrittsöffnung gemäß dem in Deutschland üblichen Fahrzeugkoordinatensystem in einer orthogonal zur in Richtung Dach weisenden Z-Achse liegenden Ebene. Im Bereich unterhalb der Lufteintrittsöffnung wird bei der Montage das Klima- und/oder Heizgerät mittels einer Montagehilfe in negative Richtung der in Richtung Fahrzeugheck weisenden X-Achse in das Fahrzeug eingefahren, d. h. nach Fahrzeug vorne. Um z. B. einen Lecklufteintritt zu verhindern, ist zur Abdichtung eine Dichtung zwischen der Spritzwand und dem Klima- und/oder Heizgerät vorgesehen. Diese Dichtung wird bereits vor dem Einfahren des Klima- und/oder Heizgeräts im Bereich der Lufteintrittsöffnung der Spritzwand vormontiert. Um beim Einfahren ein Kollidieren des Klima- und/oder Heizgeräts mit der vormontierten Dichtung zu vermeiden, werden sogenannte vorkomprimierte Memory-Dichtungen verwendet. Durch dieses Vorkomprimieren steht genügend Raum zur Verfügung, um das Klima- und/oder Heizgerät in das Fahrzeug einzufahren, ohne mit der Dichtung zu kollidieren. Nach dem Einfahren des Klima- und/oder Heizgeräts in das Fahrzeug in die geeignete Anschlußposition im Bereich der Lufteintrittsöffnung entspannt sich die Memory-Dichtung und dichtet das Klima- und/oder Heizgerät ggf. unter Toleranzausgleich gegen die Spritzwand ab.

Anschließend wird das Pollenfiltergehäuse von oben her, d. h. in negative Z-Richtung, auf die Spritzwand gesetzt und dort verschraubt. Die Abdichtung dieses Pollenfiltergehäuses gegen die Spritzwand erfolgt mittels einer auf das Pollenfiltergehäuse aufgespritzten Schaumdichtung als separate Dichtung.

Bei diesem Aufbau werden somit zwei separate Dichtungen benötigt. Durch die Verwendung einer Memory-Dichtung als vormontierbare Dichtung muß die Montage dieser Memory-Dichtung sowie das darauf erfolgende Einfahren des Heizgeräts in einem engen zeitlichen Abstand vor der Entspannung der Memory-Dichtung erfolgen, was zu einer geringeren Flexibilität bei der Montage der Baugruppen führt.

Aus der GB 2,264,987 A ist eine Dichtungsanordnung für einen Gehäuseflansch, insbesondere für Gehäuseteile von Kraftfahrzeug-Belüftungs-, Heizungs- oder Klimaanlagen bekannt, bei der ein aus einem elastischen Material bestehendes Dichtungsband auf eine sich entlang des Flansches erstreckende Rippe aufgesteckt ist. Das Dichtungsband besteht aus einem Schaumprofil, in welchem ein die Rippe aufnehmender, im wesentlichen radialer Schlitz angeordnet ist. Die sich entlang des Gehäuseflansches erstreckende Rippe ist in einer im wesentlichen U-förmigen Vertiefung des Flansches angeordnet, wobei das Material des Dichtungsbandes zwischen den seitlichen Wandteilen der U-förmigen Vertiefung eingespannt ist. Das Dichtungsband besitzt einen im wesentlichen ovalen oder kreisförmigen Querschnitt, wobei sein Schlitz einen im wesentlichen rechteckigen oder dreieckigen Querschnitt besitzt, dessen größte Breite auf der Innenseite liegt und in Richtung auf die Außenseite zugespitzt ist.

Aus der japanischen Patentanmeldung JP 04185309 A ist ein Werkzeug zur Herstellung eines einen Hinterschnitt aufweisenden Kunststoffformteils bekannt. Das Werkzeug besteht aus einer dreiteiligen Spritzgußform, die einen Auswerferstift und einen verschiebbaren Entformungshaken aufweist. Die dreiteilige Spritzgußform setzt sich aus einer Matrize, einer Patrize und einer der Patrize zugeordneten Schieberform zusammen.

Aufgabe der Erfindung ist es, eine Dichtungsanordnung für eine in einer Wand, vorzugsweise einer Spritzwand einer Karosserie, angebrachte Wandöffnung so weiterzuentwickeln, daß auf einfache und wenig aufwendige Weise eine gute Abdichtung gegen die sich anschließenden Funktionsteile unter gleichzeitigem Toleranzausgleich erreicht wird, weiter ein Werkzeug zur Herstellung eines Dichtungsbandes oder einer Ringdichtung zu schaffen, sowie ein Verfahren zur Einbringung eines Dichtungsbandes zwischen mindestens zwei Öffnungen vorzuschlagen.

Diese Aufgabe wird bezüglich der Dichtungsanordnung mit den kennzeichnenden Merkmalen des Anspruchs 1, bezüglich des Werkzeugs mit den Merkmalen des Anspruchs 11 und bezüglich des Verfahrens mit den Merkmalen des Anspruchs 12 gelöst.

Nach Anspruch 1 ist ein elastisches Dichtungsband mit einer Längsausnehmung auf einen Öffnungsrandflansch einer Wandöffnung aufgesteckt. Die Längsausnehmung weist im Querschnitt eine etwa dreieckige Grundform auf. Die Wände des elastischen Dichtungsbandes bilden einen ersten Klemmschenkel und einen zweiten Klemmschenkel, die miteinander durch eine Verbindungswand verbunden sind, wobei die Klemmschenkel an ihren freien Enden in einem Klemmspalt aneinandergrenzen. Dadurch ist das mit dem Klemmspalt bis etwa zur Innenseite der Verbindungswand auf den Öffnungsrandflansch aufgesteckte Dichtungsband in eine Zwischenmontagestellung klappbar, bei der der erste Klemmschenkel in den Bereich des Öffnungsrandflansches geklappt ist. In dieser Position des ersten Klemmschenkels ist im Klappbereich des ersten Klemmschenkels ein Freiraum zur Montage eines Funktionsteils, vorzugsweise mit einer Montagerichtung etwa parallel zur Ebene des Öffnungsrandflansches, gebildet. Nach dieser Montage ist das Dichtungsband in eine Endmontagestellung klappbar. In dieser Endmontagestellung ist der zweite Klemmschenkel in den Bereich des Öffnungsrandflansches geklappt, wobei der erste Klemmschenkel auf die Öffnungsrandfläche der Funktionsteilöffnung des Funktionsteils klappbar ist und dort dichtend anliegt. Bei konvexen Krümmungen der Klemmschenkel kann das Dichtungsband die Klappfunktion auch bei einem angenäherten Oval- oder Kreisquerschnitt ermöglichen, so daß auch solche Ausführungen umfaßt sein sollen.

Durch die Klappung des elastischen Dichtungsbandes und der damit verbundenen Freiraumschaffung im Klappbereich ist bei vormontierter Dichtung eine Funktionsteilmontage möglich, bei der das Funktionsteil auch ohne die Verwendung einer Memory-Dichtung nicht mit der Dichtung kollidiert: Zudem kann durch das Abklappen des Dichtungsbandes auf einfache Weise eine Dichtfunktion und ein Toleranzausgleich zwischen den Bauteilen erzielt werden. Dies erspart z. B. die Verwendung von aufwendigen Memory-Dichtungen und gewährleistet eine größere Flexibilität im Rahmen der Montage.

In der Endmontagestellung des elastischen Dichtungsbandes ist in einer vorteilhaften Weiterbildung der Anordnung ein zweites Funktionsteil mit einer Öffnungsrandfläche seiner Funktionsteilöffnung dicht auf den zweiten Klemmschenkel aufsetzbar und in Richtung des Öffnungsrandflansches verspannbar. Dabei wird der erste Klemmschenkel am ersten Funktionsteil dichtend angedrückt. Vorzugsweise wird die Klappung des Dichtungsbandes in die Endmontagestellung durch die Montage des zweiten Funktionsteils bewirkt.

Das vormontierte elastische Dichtungsband dieser Dichtungsanordnung fungiert hier als Doppeldichtung und stellt eine Abdichtung zu den sich an gegenüberliegenden Wandseiten anschließenden Funktionsteilen dar, ohne daß es hierfür der Anordnung einer separaten Dichtung für jedes Funktionsteil bedarf. Mit einer einzigen Dichtung ist hier somit die Abdichtung dreier Bauteile gegeneinander möglich. Damit können die Teilevielfalt reduziert und gleichzeitig der Montageaufwand verringert werden.

Die erfindungsgemäße Dichtungsanordnung kann grundsätzlich für jede Wandöffnung Verwendung finden, bei der Funktionsteile mit zugeordneten Funktionsteilöffnungen an Wände mit Wandöffnungen dicht angeschlossen werden sollen. In einer bevorzugten Ausführungsform ist die Wand eine Spritzwand einer Karosserie und das erste Funktionsteil ein Klima- und/oder Heizgerät und das zweite Funktionsteil ein Pollenfilter.

Die Längsausnehmung des elastischen Dichtungsbandes weist allgemein eine im Querschnitt in etwa dreieckförmige Grundform auf. In einer bevorzugten Ausführungsform mit guter Klapp- und Dichtfunktion entspricht die Grundform des Querschnitts der Längsausnehmung in etwa der eines gleichseitigen Dreiecks.

In einer weiteren vorteilhaften Ausbildung weist der erste Klemmschenkel eine konvexe Wölbung auf und/oder ist der zweite Klemmschenkel eben, wobei im Bereich der Anbindung des zweiten Klemmschenkels an die Verbindungswand eine abstehende Erhebung als Dichtwulst ausgebildet ist. In diesem Anschlußbereich ist ferner vorzugsweise ein innenliegender Stützbund ausgebildet. Über diesen Stützbund ist das Dichtungsband bei Anlage am Öffnungsrandflansch abstützbar, z. B. in der Endmontagestellung bei abgeklapptem Dichtungsband. Gleichzeitig ist jedoch das Verschwenken des Dichtungsbandes aus der Endmontage- in die Zwischenmontagestellung trotz des Stützbundes nach wie vor möglich, da die Abstützung nur in negative Z-Richtung erfolgt.

Um das Dichtungsband in der hochgeklappten Lage der Zwischenmontagestellung zu halten und damit den Montagefreiraum herzustellen, kann eine mechanische Hilfsvorrichtung verwendet werden, die sich an der die Wandöffnung aufweisenden Wandung abstützt und die Dichtung hochklappt sowie in dieser Lage hält. Vorzugsweise ist jedoch der Klemmschenkel in dieser hochgeklappten Lage der Zwischenmontagestellung mittels einer Rastnase festgelegt, die am inneren Übergang zwischen erstem Klemmschenkel und Verbindungswand ausgebildet ist. Dadurch kann der Einsatz mechanischer Hilfsvorrichtungen vermieden werden, so daß die für die Montage benötigte Teilevielfalt verringert ist.

Bevorzugt ist der Öffnungsrandflansch und entsprechend der freie Rand des zweiten Klemmschenkels abgekröpft und reicht das freie Ende des ersten Klemmschenkels bis in die Abkröpfkante des Öffnungsrandflansches. Durch die Abkröpfung des Öffnungsrandflansches und entsprechend des zweiten Klemmschenkels ist eine Abzugsicherung für das Dichtband in X-Richtung, d. h. in Richtung Fahrzeugheck, ausgebildet. Das freie Ende des ersten Klemmschenkels in der Abkröpfkante bildet den Schwenkpunkt des Dichtungsbandes und ist ortsfest.

In einer weiteren vorzugsweisen Ausgestaltung ist das Dichtungsband als Doppeldichtung zu einer Ringdichtung geschlossen. Dadurch können Wandöffnungen mit einem einzigen Dichtungsband vollständig abgedichtet werden. Das Dichtungsband kann aus jeglichem elastischen Material hergestellt sein. Als bevorzugte Materialien für das Dichtungsband werden Kautschuk oder EPDM oder Kunststoffschaum verwendet.

Nach Anspruch 11 ist zur Herstellung eines Dichtungsbandes eine dreiteilige Spritzgußform vorgesehen. Diese Spritzgußform besteht aus einem Kern, einer ersten Formhälfte und einer zweiten Formhälfte und weist ferner einen ersten Auswerferstift und einen zweiten Auswerferstift auf. Der Kern dieser dreiteiligen Spritzgußform füllt den Innenraum der Längsausnehmung und den Klemmspalt aus, während die erste Formhälfte die Außenseite des zweiten Klemmschenkels und einen Teil der angrenzenden Verbindungswand bildet und dabei orthogonal zum zweiten Klemmschenkel und der zweiten Formhälfte öffenbar ist. Die zweite Formhälfte bildet die übrigen Außenseiten des ersten Klemmschenkels und der Verbindungswand. Mit dem ersten, im Kern gelagerten Auswerferstift ist der zweite Klemmschenkel und ggf. ein Teil der Verbindungswand bei geöffneter erster Formhälfte um ca. 90° elastisch aufklappbar und vom zugeordneten Kernbereich abhebbar. Mit dem zweiten, in der ersten Formhälfte gelagerten Auswerferstift ist der erste Klemmschenkel und ggf. der restliche Teil der Verbindungswand entgegen der Öffnungsrichtung vom Kern ablösbar.

Mit einem derartigen Werkzeug ist es möglich, ein Dichtungsband einteilig in einem einzigen Arbeitsgang herzustellen. Dadurch verringern sich die Herstellungszeit und auch die Kosten für die Herstellung eines derartigen Dichtungsbandes.

Nach Anspruch 12 wird ein Verfahren zur Einbringung eines Dichtungsbandes zwischen mindestens zwei Öffnungen entlang eines Öffnungsrandflansches einer der Öffnungen mit folgenden drei Verfahrensschritten vorgeschlagen:
- Aufsetzen des Dichtungsbandes auf den Öffnungsrandflansch derart, daß bei einem Positionieren der Öffnungen das Dichtungsband außer Eingriff gehalten wird zu den Öffnungen;
- Positionieren der Öffnungen zueinander;
- In Eingriff bringen des Dichtungsbandes bezüglich der Öffnungen.

Mit einem solchen Verfahren werden die Montagemöglichkeiten bei einem Positionieren der Öffnungen vergrößert und ggf. die Montage vereinfacht, da durch das vorerst außer Eingriff gehaltene Dichtungsband Montagefreiräume geschaffen werden. Erst wenn die Öffnungen positioniert sind, wird dann das Dichtungsband bezüglich der Öffnungen in Eingriff gebracht.

Im ersten Verfahrensschritt kann das Dichtungsband mit Unterschiedlichen Maßnahmen, beispielsweise von Hand vorerst außer Eingriff gehalten werden, vorzugsweise wird dazu jedoch eine mit dem Dichtungsband verbundene Rastnase verwendet.

Besonders vorteilhaft ist das Verfahren verwendbar, wenn das Positionieren von zwei Öffnungen mit einer Positionierrichtung etwa parallel zu den Öffnungsflächen erfolgt, da dazu ein geeigneter Freiraum durch das außer Eingriff gehaltene Dichtungsband geschaffen wird.

Das Verfahren ist besonders gut zur Abdichtung zwischen drei zueinander zu positionierenden Öffnungen geeignet, wobei dann das Dichtungsband als Doppeldichtung wirkt und der dritte Verfahrensschritt durch das Positionieren der dritten Öffnung durchführbar ist.

Dabei kann durch das Positionieren der dritten Öffnung das Dichtungsband mit einem Stützbund am Rand der ersten Öffnung abgestützt werden, wodurch insbesondere die Elastizität und Anlagekraft des Dichtungsbandes bezüglich der Öffnungen beeinflußbar ist. Ein besonders geeigneter Anwendungsbereich für das Verfahren ist die Abdichtung von Luftdurchtrittöffnungen bei Komponenten einer Heizung- und/oder Kühlung- und/oder Klimaanlage eines Kraftfahrzeugs.

Anhand einer Zeichnung wird die Erfindung näher erläutert.

Es zeigen:
- Fig. 1: eine schematische Darstellung einer Spritzwand einer Karosserie mit Wandöffnung und darin eingeführtem Dichtungsband,
- Fig. 2: eine schematische Darstellung einer Spritzwand einer Karosserie mit vormontiertem Dichtungsband als Ringdichtung,
- Fig. 3: einen schematischen Querschnitt einer Dichtungsanordnung mit vormontiertem Dichtungsband entlang der Linie A-A der Fig. 2,
- Fig. 4: einen schematischen Querschnitt einer Dichtungsanordnung mit in eine Zwischenmontagestellung hochgeklapptem Dichtungsband,
- Fig. 5: einen schematischen Querschnitt einer Dichtungsanordnung mit vormontiertem Dichtungsband in einer Zwischenmontagestellung des Dichtungsbandes während des Einfahrens eines Klimagerätes als Funktionsteil,
- Fig. 6: einen schematischen Querschnitt einer Dichtungsanordnung zu Beginn des Übergangs von der Zwischenmontagestellung in die Endmontagestellung,
- Fig. 7: einen schematischen Querschnitt einer Dichtungsanordnung in der Endmontagestellung,
- Fig. 8: eine schematische Darstellung eines Werkzeugs zur Herstellung eines Dichtungsbandes oder einer Ringdichtung unmittelbar nach dem Gießen,
- Fig. 9: eine schematische Darstellung eines Werkzeugs zur Herstellung eines Dichtungsbandes oder einer Ringdichtung mit nach oben gefahrenen Werkzeugteilen zu Beginn einer ersten Auswurfbewegung, und
- Fig. 10: eine schematische Darstellung eines Werkzeugs zur Herstellung eines Dichtungsbandes oder einer Ringdichtung mit teilweise ausgeworfenem Dichtungsband.

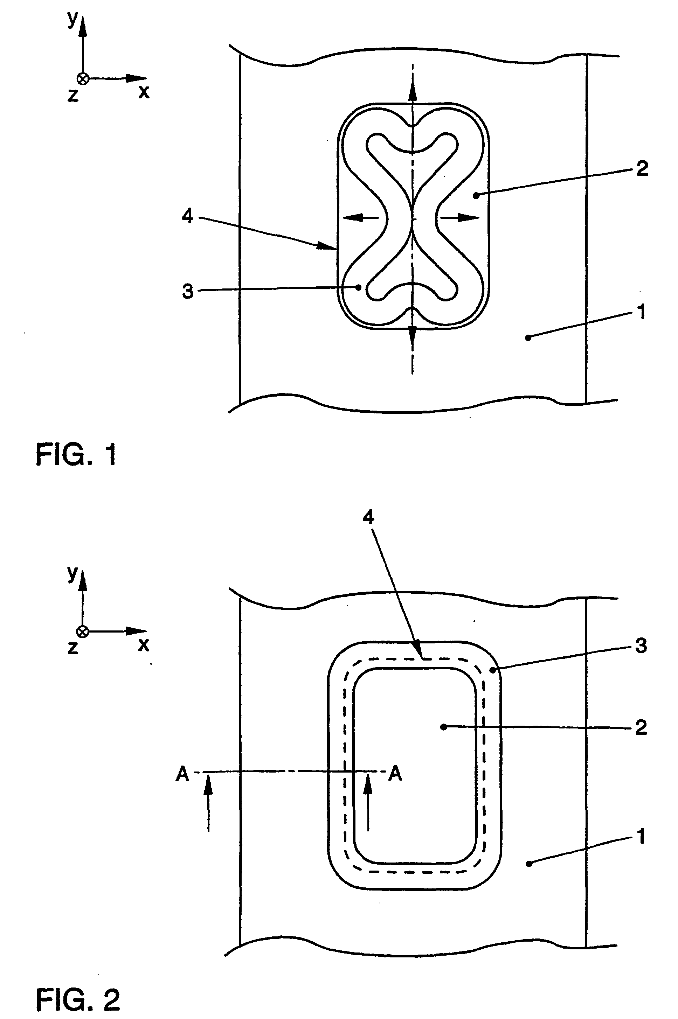

Anhand der Fig. 1 bis 7 wird die Verwendung der erfindungsgemäßen Dichtungsanordnung in Verbindung mit dem Anschluß eines Klimagerätes 16 sowie eines Pollenfiltergehäuses 17 mit deren Geräteöffnungen an eine Wandöffnung 2 einer Spritzwand 1 erläutert, wobei die Wandöffnung 2 in einer durch die Y- und X-Achse eines in Deutschland üblichen Fahrzeugkoordinatensystems aufgespannten Ebene liegen. Dabei weist die X-Achse in Richtung Fahrzeugheck, die Y-Achse in Richtung Beifahrerseite und eine Z-Achse in Richtung Dach. An die Wandöffnung 2 soll nach oben hin, d. h. in positive Z-Richtung, das Pollenfiltergehäuse 17 und nach unten hin, d. h. in negative Z-Richtung, das Klimagerät 16 durch Einfahren in negative X-Richtung dicht angeschlossen werden.

In einem ersten Montageschritt wird ein Dichtungsband 3 vormontiert, wie dies in den Fig. 1 und 2 dargestellt ist. Dazu wird zuerst das als Ringdichtung ausgebildete Dichtungsband 3 zusammengefaltet und in die Wandöffnung 2 eingeführt. Anschließend wird das Dichtungsband 3, wie dies in der Fig. 1 durch die Pfeile gekennzeichnet ist, über einen Öffnungsrandflansch 4 der Wandöffnung 2 geschoben. In der Fig. 2 ist das Dichtungsband 3 fertig vormontiert.

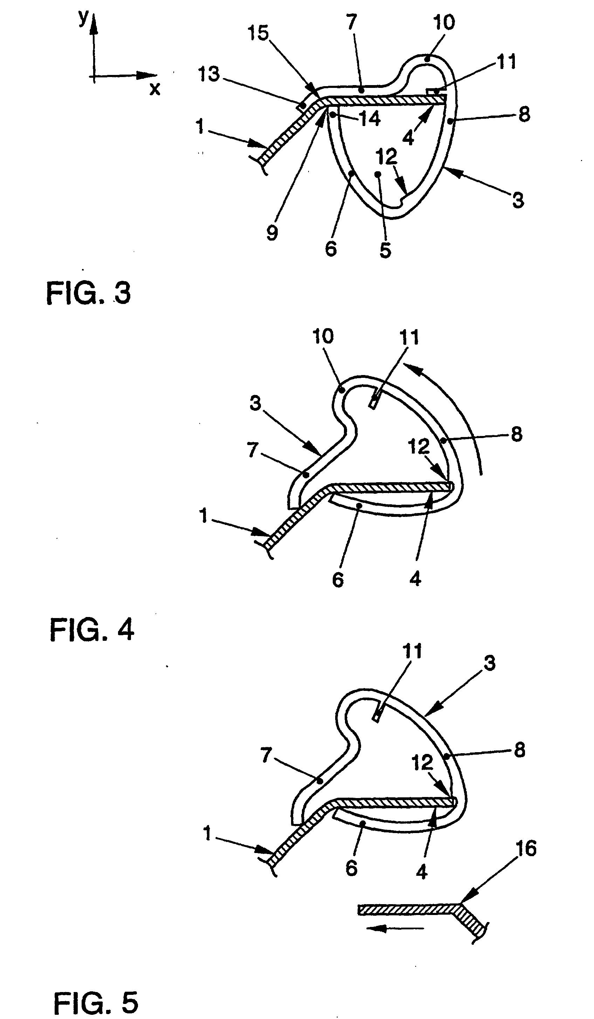

In der Fig. 3 ist ein schematischer Querschnitt entlang der Linie A-A der Fig. 2 dargestellt, aus dem ersichtlich ist, daß das Dichtungsband 3 eine Längsausnehmung 5 aufweist. Die Grundform des Querschnitts dieser Längsausnehmung 5 entspricht in etwa der eines gleichseitigen Dreiecks, wobei die Wände des Dichtungsbandes 3 einen ersten Klemmschenkel 6, einen zweiten Klemmschenkel 7 und eine Verbindungswand 8 aufweisen, die den ersten Klemmschenkel 6 und den zweiten Klemmschenkel 7 verbindet. Die freien Enden 13, 14 der Klemmschenkel 6, 7 grenzen dabei in: einem Klemmspalt 9 aneinander.

Der erste Klemmschenkel 6 weist eine konvexe Wölbung sowie am inneren Übergang zur Verbindungswand 8 eine Rastnase 12 auf. Dagegen ist der zweite Klemmschenkel 7 im wesentlichen eben ausgebildet und weist im Bereich der Anbindung des zweiten Klemmschenkels 7 an die Verbindungswand 8 eine abstehende Erhebung als Dichtwulst 10 auf. Im Bereich dieses Dichtwulstes 10 ist an der Verbindungswand 8 innen ein Stützbund 11 ausgebildet.

Der Öffnungsrandflansch 4 und entsprechend der freie Rand 13 des zweiten Klemmschenkels 7 sind abgekröpft, während das freie Ende 14 des ersten Klemmschenkels 6 bis in die Abkröpfkante 15 des Öffnungsrandflansches 4 reicht.

Durch die Abkröpfung des Öffnungsrandflansches 4 und des freien Rands 13 des zweiten Klemmschenkels 7 wird eine Abzugsicherung in X-Richtung hergestellt. Andererseits wird durch den Stützbund 11 eine Verschiebung des Dichtungsbandes 3 in negative Z-Richtung verhindert. Das freie Ende 14 ist ortsfest und bildet in der Abkröpfkante den Schwenkpunkt des Dichtungsbandes 3.

Ausgehend von der vormontierten Grundstellung des Dichtungsbandes 3, wie sie in der Fig. 3 dargestellt ist, kann nunmehr das Dichtungsband 3 bei der Montage des Klimagerätes 16 manuell hochgeklappt werden, wie dies in den Fig. 4 und 5 schematisch dargestellt ist. Damit wird verhindert, daß das Dichtungsband 3 beim Einfahren des Heizgerätes 16 mit diesem kollidiert.

Wie dies in den Fig. 4 und 5 weiter dargestellt ist, wird das Dichtungsband 3 in dieser Zwischenmontagestellung über die Rastnase 12, die in der hochgeklappten Zwischenmontagestellung am Öffnungsrandflansch 4 einschnappt, gehalten. Auf diese Weise ist eine zeitweise Entkopplung zwischen dem Dichtungsband 3 und dem Klimagerät 16 gegeben.

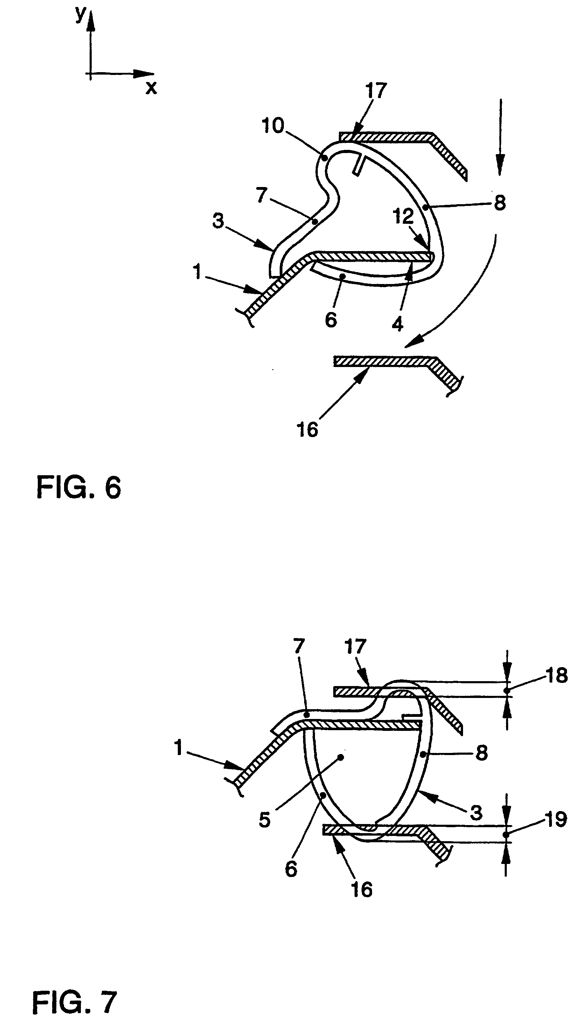

In der Fig. 6 ist schematisch die Montage des Pollenfiltergehäuses 17 dargestellt. Dieses Pollenfiltergehäuse 17 wird senkrecht zur Wandöffnungsebene von der positiven Z-Richtung kommend zugeführt. Es stößt dann auf das Dichtungsband 3, wodurch diese bei der weiteren Vorwärtsbewegung des Pollenfiltergehäuses 17 so heruntergedrückt wird, daß die Rastnase 12 außer Eingriff mit dem Öffnungsrandflansch 4 gelangt und dadurch das Dichtungsband 3 in die in der Fig.7 schematisch dargestellte Endmontagestellung herunterklappt. Das Herunterklappen des Dichtungsbandes 3 muß nicht zwingend durch die Montage des Pollenfiltergehäuses 17 erfolgen. Alternativ ist hier auch das Herunterklappen von Hand oder mit Hilfe einer Vorrichtung möglich.

Nach dem Befestigen des Pollenfiltergehäuses 17 liegt das Dichtungsband 3 als Doppeldichtung in ihrer endgültigen Einbaulage und übernimmt die Dichtungsfunktion gegenüber dem Klimagerät 16 und dem Pollenfiltergehäuse 17.

Durch die konstruktiv bestimmbaren Überschnitte 18 und 19 wird der Toleranzausgleich und die zur Dichtung nötige Pressung zwischen dem Klimagerät 16 und dem Pollenfiltergehäuse 17 erzielt.

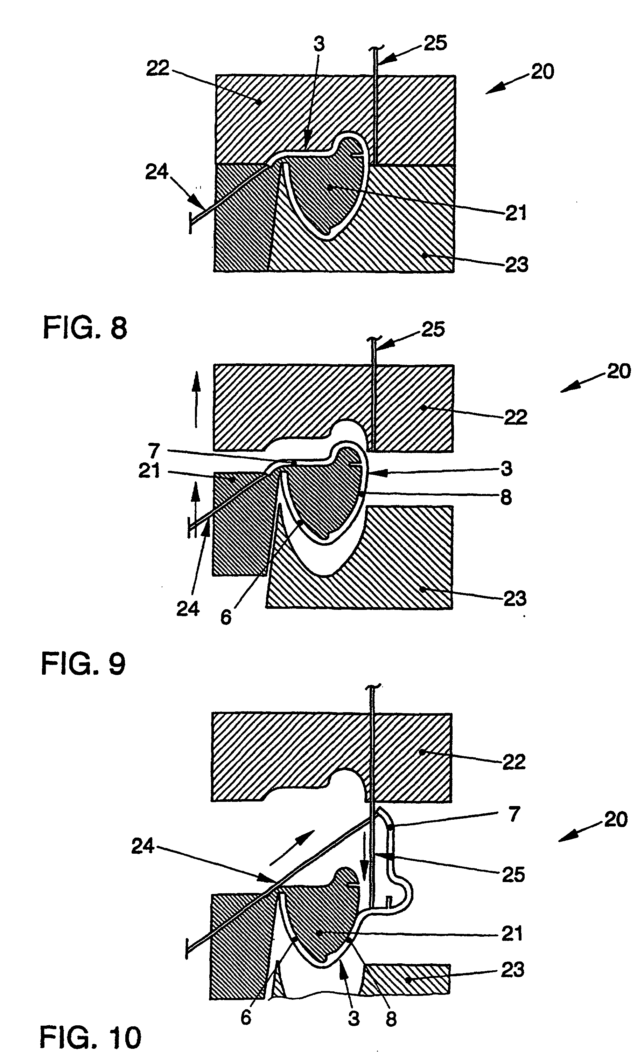

In den Fig. 8 bis 10 ist schematisch ein Werkzeug 20 zur Herstellung des Dichtungsbandes 3 dargestellt. Dieses Werkzeug 20 ist eine dreiteilige Spritzgußform, die aus einem Kern 21, einer ersten Formhälfte 22 sowie einer zweiten Formhälfte 23 besteht. Ferner umfaßt das Werkzeug 20 einen ersten Auswerferstift 24 und einen zweiten Auswerferstift 25.

Wie dies in der Fig. 8 schematisch dargestellt ist, füllt der Kern 21 den Innenraum der Längsausnehmung 5 des Dichtungsbandes 3 sowie den Klemmspalt 9 zwischen freiem Rand 13 und freiem Ende 14 der Klemmschenkel 6, 7 aus. Die erste Formhälfte 22 bildet die Außenseite des zweiten Klemmschenkels 7 und eines Teils der an den zweiten Klemmschenkel angrenzenden Verbindungswand 8. Diese erste Formhälfte 22 ist orthogonal zum zweiten Klemmschenkel 7 und der zweiten Formhälfte 23 öffenbar.

Die zweite Formhälfte 23 bildet die übrigen Außenseiten des ersten Klemmschenkels 6 und der Verbindungswand 8.

Mit dem Werkzeug 20 ist es möglich, das Dichtungsband 3 einteilig in einem Arbeitsgang herzustellen. Nach erfolgtem Spritzgußvorgang fährt zunächst die erste Formhälfte 22, wie dies in der Fig. 9 dargestellt ist, nach oben. Im Anschluß daran fährt der Kern 21 nach oben, wie dies ebenfalls in der Fig. 9 schematisch dargestellt ist. Alternativ dazu kann auch die zweite Formhälfte 23 nach unten abfahren.

Zum Ablösen des Dichtungsbandes 3 von dem Kern 21 wird der im Kern 21 gelagerte erste Auswerferstift 24 bewegt, so daß der zweite Klemmschenkel 7 und ein Teil der Verbindungswand 8 von dem Kern 21 abgehoben werden, wie dies in der Fig. 10 schematisch dargestellt ist.

Anschließend fährt, wie dies ebenfalls in der Fig. 10 schematisch dargestellt ist, der zweite Auswerferstift 25, der in der ersten Formhälfte 22 gelagert ist, nach unten und hebt den Rest der Verbindungswand 8 und den ersten Klemmschenkel 6 von dem Kern ab.

### BEZUGSZEICHENLISTE

- 1: Spritzwand
- 2: Wandöffnung
- 3: Dichtungsband
- 4: Öffnungsrandflansch
- 5: Längsausnehmung
- 6: erster Klemmschenkel
- 7: zweiter Klemmschenkel
- 8: Verbindungswand
- 9: Klemmspalt
- 10: Dichtwulst
- 11: Stützbund
- 12: Rastnase
- 13: freier Rand des zweiten Klemmschenkels
- 14: freies Ende des ersten Klemmschenkels
- 15: Abkröpfkante
- 16: Klimagerät
- 17: Pollenfiltergehäuse
- 18: Überschnitt
- 19: Überschnitt
- 20: Werkzeug
- 21: Kern
- 22: erste Formhälfte
- 23: zweite Formhälfte
- 24: erster Auswerferstift
- 25: zweiter Auswerterstift

## Patentansprüche

1. Dichtungsanordnung umfassend ein elastisches Dichtungsband (3), eine eine Wandöffnung (2) aufweisende Wand (1), vorzugsweise eine Spritzwand einer Karosserie, und ein Funktionsteil (16) mit einer der Wandöffnung (2) zugeordneten Funktionsteilöffnung, wobei das Dichtungsband (3) mit einer Längsausnehmung (5) auf einen Öffnungsrandflansch (4) der Wandöffnung (2) aufsteckbar und das Funktionsteil (16) mit der der Wandöffnung (2) zugeordneten Funktionsteilöffnung an der Wandöffnung (2) dicht anschließbar ist,
**dadurch gekennzeichnet,**
**dass** die Längsausnehmung (5) des Dichtungsbandes (3) im Querschnitt eine etwa dreieckförmige Grundform aufweist, wobei die Wände des Dichtungsbandes (3) einen ersten und zweiten Klemmschenkel (6, 7) und eine diese verbindende Verbindungswand (8) bilden und die Klemmschenkel (6, 7) an ihren freien Enden (13, 14) in einem Klemmspalt (9) aneinandergrenzen, dergestalt, dass das mit dem Klemmspalt (9) bis etwa zur Innenseite der Verbindungswand (8) auf den Öffnungsrandflansch (4) aufgesteckte Dichtungsband (3) in eine Zwischenmontagestellung klappbar ist, in der der erste Klemmschenkel (6) in den Bereich des Öffnungsrandflansches (4) geklappt ist, wobei ein Freiraum im Klappbereich des ersten Klemmschenkels (6) zur Montage des Funktionsteils (16), vorzugsweise mit einer Montagerichtung etwa parallel zur Ebene des Öffnungsrandflansches (4) gebildet ist, und dass das Dichtungsband (3) anschließend in eine Endmontagestellung klappbar ist, in der der zweite Klemmschenkel (7) in den Bereich des Öffnungsrandflansches (4) klappbar ist, wobei der erste Klemmschenkel (6) auf die Öffnungsrandfläche der Funktionsteilöffnung des Funktionsteils (16) klappbar ist und dort dichtend anliegt.

2. Dichtungsanordnung nach Anspruch 1,
**dadurch gekennzeichnet, dass** an einer gegenüberliegenden Wandseite ein zweites Funktionsteil (17) mit einer zugeordneten Funktionsteilöffnung dicht anschließbar ist, dass das elastische Dichtungsband (3) als Doppeldichtung mit seiner Längsausnehmung (5) auf einen Öffnungsrandflansch (4) der Wandöffnung (2) aufsteckbar ist, dass das Dichtungband (3) in seine Zwischenmontagestellung klappbar ist, dass das Dichtungsband (3) nach Montage des ersten Funktionsteils (16) in seine Endmontagesteilung klappbar ist, und dass das zweite Funktionsteil (17) mit der Öffnungsrandfläche seiner Funktionsteilöffnung auf den zweiten Klemmschenkel (7) dicht aufsetzbar und in Richtung des Öffnungsrandflansches (4) verspannbar ist, wobei der erste Klemmschenkel (6) am ersten Funktionsteil (16) dichtend anliegt.

3. Dichtungsanordnung nach Anspruch 2,
**dadurch gekennzeichnet, dass** die Klappung des Dichtungsbandes (3) in seine Endmontagestellung durch das am Dichtungsband (3) bei der Montage anliegende zweite Funktionsteil (17) erfolgt.

4. Dichtungsanordnung nach einem der Ansprüche 1 bis 3,
**dadurch gekennzeichnet, dass** die Wand eine Spritzwand (1) einer Karosserie ist, und dass das erste Funktionsteil (16) ein Klima- und/oder Heizgerät und das zweite Funktionsteil (17) ein Pollenfilter ist.

5. Dichtungsanordnung nach einem der Ansprüche 1 bis 4,
**dadurch gekennzeichnet, dass** die Grundform des Querschnitts der Längsausnehmung (5) etwa der eines gleichseitigen Dreiecks entspricht.

6. Dichtungsanordnung nach einem der Ansprüche 1 bis 5,
**dadurch gekennzeichnet, dass** der erste Klemmschenkel (6) eine konvexe Wölbung aufweist und/oder der zweite Klemmschenkel (7) eben ist und im Bereich der Verbindungswand (8) eine abstehende Erhebung als Dichtwulst (10) vorzugsweise in Verbindung mit einem innenliegenden Stützbund (11) aufweist.

7. Dichtungsanordnung nach einem der Ansprüche 1 bis 6,
**dadurch gekennzeichnet, dass** der erste Klemmschenkel (6) am inneren Übergang zur Verbindungswand (8) eine Rastnase (12) zur Festlegung der Zwischenmontagestellung aufweist.

8. Dichtungsanordnung nach einem der Ansprüche 1 bis 7,
**dadurch gekennzeichnet, dass** der Öffnungsrandflansch (4) und entsprechend der freie Rand (13) des zweiten Klemmschenkels (7) als Abzugsicherung abgekröpft sind und das freie Ende (14) des ersten Klemmschenkels (6) bis in die Abkröpfkante (15) des Öffnungsrandflansches (4) reicht.

9. Dichtungsanordnung nach einem der Ansprüche 1 bis 8,
**dadurch gekennzeichnet, dass** das Dichtungsband (3) als Doppeldichtung zu einer Ringdichtung geschlossen ist.

10. Dichtungsanordnung nach einem der Ansprüche 1 bis 9,
**dadurch gekennzeichnet, dass** das Dichtungsband (3) aus Kautschuk oder EPDM oder aus Kunststoffschaum hergestellt ist.

11. Werkzeug zur Herstellung eines Dichtungsbandes (3) nach einem der Ansprüche 1 bis 10, umfassend eine dreiteilige Spritzgußform (20) mit einem Kern (21), einer ersten Formhälfte (22) und einer zweiten Formhälfte (23) sowie mit einem ersten Auswerferstift (24) und einem zweiten Auswerferstift (25), wobei der Kern (21) den Innenraum der Längsausnehmung (5) und den Klemmspalt (9) ausfüllt,
**dadurch gekennzeichnet,**
**dass** die erste Formhälfte (22) die Außenseite des zweiten Klemmschenkels (7) und einen Teil der angrenzenden Verbindungswand (8) bildet und dabei orthogonal zum zweiten Klemmschenkel (7) und der zweiten Formhälfte (23) öffenbar ist, dass die zweite Formhälfte (23) die übrigen Außenseiten des ersten Klemmschenkels (6) und der Verbindungswand (8) bildet, und dass mit dem ersten, im Kern (21) gelagerten Auswerferstift (24) der zweite Klemmschenkel (7) und gegebenenfalls ein Teil der Verbindungswand (8) bei geöffneter erster Formhälfte (22) um etwa 90° elastisch aufklappbar und vom zugeordneten Kernbereich abhebbar ist und anschließend der erste Klemmschenkel (6) und gegebenenfalls der restliche Teil der Verbindungswand (8) mit dem zweiten, in der ersten Formhälfte (22) gelagerten Auswerferstift (25) etwa entgegen der Öffnungsrichtung vom Kern (21) ablösbar ist.

12. Verfahren zur Einbringung eines Dichtungsbandes (3) zwischen mindestens zwei Öffnungen entlang eines Öffnungsrandflansches (4) einer der Öffnungen, **gekennzeichnet durch** die drei Verfahrensschritte:
- Aufsetzen des Dichtungsbandes (3) auf den Öffnungsrandflansch (4) derart, dass bei einem Positionieren der Öffnungen das Dichtungsband (3) außer Eingriff gehalten wird zu den Öffnungen;
- Positionieren der Öffnungen zueinander;
- In Eingriff bringen des Dichtungsbandes (3) bezüglich der Öffnungen.

13. Verfahren nach Anspruch 12, **dadurch gekennzeichnet, dass** als Dichtungsband (3) ein eine Rastnase (12) aufweisendes Dichtungsband (3), vorzugsweise ein Dichtungsband (3) mit einer Längsausnehmung (5) mit innenliegender Rastnase (12) verwendet wird, und dass im ersten Verfahrensschritt das Dichtungsband (3) durch die Rastnase (12) außer Eingriff gehalten wird.

14. Verfahren nach Anspruch 12 oder Anspruch 13,
**dadurch gekennzeichnet, dass** das Positionieren von zwei Öffnungen zueinander mit einer Positioniereinrichtung etwa parallel zu den Öffnungsflächen erfolgt.

15. Verfahren nach einem der Ansprüche 12 bis 14,
**dadurch gekennzeichnet, dass** das Dichtungsband (3) als Doppeldichtung zwischen drei zueinander positionierten Öffnungen verwendet und der dritte Verfahrensschritt durch das Positionieren der dritten Öffnung bewirkt wird.

16. Verfahren nach Anspruch 15,
**dadurch gekennzeichnet, dass** als Dichtungsband (3) ein Dichtungsband mit einem Stützbund, vorzugsweise ein Dichtungsband (3) mit einer Längsausnehmung (5) und mit innenliegendem Stützbund (11) verwendet wird, und dass durch das Positionieren der dritten Öffnung das Dichtungsband (3) mit dem Stützbund (11) am Rand der ersten Öffnung abgestützt wird.

17. Verfahren nach einem der Ansprüche 12 bis 16,
**dadurch gekennzeichnet, dass** die Öffnungen Luftdurchtrittöffnungen von Komponenten einer Heizung- und/oder Kühlung- und/oder Klimaanlage eines Kraftfahrzeugs sind.

## Claims

1. Sealing arrangement, comprising an elastic sealing strip (3), a wall (1) having a wall opening (2), preferably a splashboard of a body, and a functional part (16) having a functional-part opening assigned to the wall opening (2), it being possible for the sealing strip (3) to be placed with the longitudinal recess (5) onto an opening edge flange (4) of the wall opening (2) and for the functional part (16) to be connected tightly to the wall opening (2) by means of the functional-part opening, which is assigned to the wall opening (2), **characterized in that** the longitudinal recess (5) of the sealing strip (3) has, in cross section, an approximately triangular basic shape, the walls of the sealing strip (3) forming a first and second clamping leg (6, 7) and a connecting wall (8) connecting them, and the clamping legs (6, 7) lying adjacent to each other at their free ends (13, 14) in a clamping gap (9) in such a manner that the sealing strip (3), which is placed by means of the clamping gap (9) onto the opening edge flange (4) approximately as far as the inside of the connecting wall (8), can be folded into an intermediate installation position, in which the first clamping leg (6) is folded into the region of the opening edge flange (4), a clearance being formed in the folding region of the first clamping leg (6) for the installation of the functional part (16), preferably with an installation direction approximately parallel to the plane of the opening edge flange (4), and **in that** the sealing strip (3) can then be folded into a final installation position, in which the second clamping leg (7) can be folded into the region of the opening edge flange (4), in which case the first clamping leg (6) can be folded onto the opening edge surface of the functional-part opening of the functional part (16) where it bears in a sealing manner.

2. Sealing arrangement according to Claim 1, **characterized in that** a second functional part (17) can be connected by means of an associated functional-part opening tightly to an opposite wall side, **in that** the elastic sealing strip (3) in the form of a double seal can be placed by means of its longitudinal recess (5) onto an opening edge flange (4) of the wall opening (2), **in that** the sealing strip (3) can be folded into its intermediate installation position, **in that**, after the first functional part (16) is installed, the sealing strip (3) can be folded into its final installation position, and **in that** the second functional part (17) can be placed by means of the opening edge surface of its functional-part opening tightly onto the second clamping leg (7) and can be clamped in the direction of the opening edge flange (4), in which case the first clamping leg (6) bears in a sealing manner against the first functional part (16).

3. Sealing arrangement according to Claim 2, **characterized in that** the sealing strip (3) is folded into its final installation position by means of the second functional part (17) which bears against the sealing strip (3) during installation.

4. Sealing arrangement according to one of Claims 1 to 3, **characterized in that** the wall is a splashboard (1) of a body, and **in that** the first functional part (16) is an air-conditioning and/or heating unit and the second functional part (17) is a pollen filter.

5. Sealing arrangement according to one of Claims 1 to 4, **characterized in that** the basic shape of the cross section of the longitudinal recess (5) corresponds approximately to that of an equilateral triangle.

6. Sealing arrangement according to one of Claims 1 to 5, **characterized in that** the first clamping leg (6) has a convex curvature and/or the second clamping leg (7) is flat and has, in the region of the connecting wall (8), a protruding elevation in the form of a sealing bead (10), preferably in conjunction with an inner supporting collar (11).

7. Sealing arrangement according to one of Claims 1 to 6, **characterized in that** the first clamping leg (6) has, on the inner transition to the connecting wall (8), a latching lug (12) for securing the intermediate installation position.

8. Sealing arrangement according to one of Claims 1 to 7, **characterized in that** the opening edge flange (4) and correspondingly the free edge (13) of the second clamping leg (7) are bent at right angles as a pull-off safeguard and the free end (14) of the first clamping leg (6) reaches into the bent-over edge (15) of the opening edge flange (4).

9. Sealing arrangement according to one of Claims 1 to 8, **characterized in that** the sealing strip (3) of a double seal is closed to form an annular seal.

10. Sealing arrangement according to one of Claims 1 to 9, **characterized in that** the sealing strip (3) is produced from rubber or EPDM or from foamed plastic.

11. Mould for producing a sealing strip (3) according to one of Claims 1 to 10, comprising a three-part injection mould (20) having a core (21), a first mould half (22) and a second mould half (23) and also having a first ejector pin (24) and a second ejector pin (25), the core (21) filling the interior space of the longitudinal recess (5) and the clamping gap (9), **characterized in that** the first mould half (22) forms the outside of the second clamping leg (7) and part of the adjacent connecting wall (8) and can be opened orthogonally to the second clamping leg (7) and a second mould half (23), **in that** the second mould half (23) forms the rest of the outside of the first clamping leg (6) and of the connecting wall (8), and **in that** the first ejector pin (24), which is mounted in the core (21), can be used to elastically open out the second clamping leg (7) and, if appropriate, part of the connecting wall (8) to approximately 90°, when the first mould half (22) is open, and to lift it off the associated core region, and then the second ejector pin (25), which is mounted in the first mould half (22), can be used to detach the first clamping leg (6) and, if appropriate, the remaining part of the connecting wall (8) from the core (21) approximately counter to the opening direction.

12. Method for placing a sealing strip (3) between at least two openings along an opening edge flange (4) of one of the openings, **characterized by** the following three method steps:
- placing the sealing strip (3) onto the opening edge flange (4) in such a manner that, during positioning of the openings, the sealing strip (3) is kept disengaged from the openings;
- positioning the openings with respect to one another;
- bringing the seal strip (3) into engagement with respect to the openings.

13. Method according to Claim 12, **characterized in that** the sealing strip (3) which is used is a sealing strip (3) which has a latching lug (12), preferably a sealing strip (3) having a longitudinal recess (5) with an inner latching lug (12), and **in that**, in the first method step, the sealing strip (3) is kept disengaged by means of the latching lug (12).

14. Method according to Claim 12 or Claim 13, **characterized in that** the positioning of two openings with respect to each other takes place with a positioning device approximately parallel to the opening surfaces.

15. Method according to one of Claims 12 to 14, **characterized in that** the sealing strip (3) is used as a double seal between three openings positioned with respect to one another, and the third method step is brought about by the positioning of the third opening.

16. Method according to Claim 15, **characterized in that** the sealing strip (3) which is used is a sealing strip having a supporting collar, preferably a sealing strip (3) having a longitudinal recess (5) and having an inner supporting collar (11), and **in that** the positioning of the third opening causes the sealing strip (3) to be supported by the supporting collar (11) on the edge of the first opening.

17. Method according to one of Claims 12 to 16, **characterized in that** the openings are air passage openings of components of a heating and/or cooling and/or air-conditioning system of a motor vehicle.

## Revendications

1. Dispositif d'étanchéité comprenant une bande d'étanchéité élastique (3), une paroi (1) présentant une ouverture de paroi (2), de préférence un tablier d'une carrosserie, et une partie fonctionnelle (16) comprenant une ouverture de partie fonctionnelle associée à l'ouverture de paroi (2), la bande d'étanchéité (3) pouvant être apposée avec un évidement longitudinal (5) sur une bride périphérique d'ouverture (4) de l'ouverture de paroi (2) et la partie fonctionnelle (16) avec l'ouverture de partie fonctionnelle associée à l'ouverture de paroi (2) pouvant être raccordée hermétiquement à l'ouverture de paroi (2),
**caractérisé en ce que**
l'évidement longitudinal (5) de la bande d'étanchéité (3) présente, en section transversale, une forme de base essentiellement triangulaire, les parois de la bande d'étanchéité (3) formant une première et une deuxième branche de serrage (6, 7) et une paroi de liaison (8) les reliant, et les branches de serrage (6, 7) étant adjacentes l'une à l'autre au niveau de leur extrémité libre (13, 14) dans une fente de serrage (9) de telle sorte que la bande d'étanchéité (3) apposée sur la bride périphérique d'ouverture (4) avec la fente de serrage (9) jusqu'à environ le côté interne de la paroi de liaison (8) puisse être rabattue dans une position de montage intermédiaire dans laquelle la première branche de serrage (6) est rabattue dans la région de la bride périphérique d'ouverture (4), un espace libre étant formé dans la région du rabattement de la première branche de serrage (6) en vue du montage de la partie fonctionnelle (16), de préférence avec une direction de montage approximativement parallèle au plan de la bride périphérique d'ouverture (4), et **en ce que** la bande d'étanchéité (3) peut ensuite être rabattue dans une position de montage finale dans laquelle la deuxième branche de serrage (7) peut être rabattue dans la région de la bride périphérique d'ouverture (4), la première branche de serrage (6) pouvant être rabattue sur la surface périphérique d'ouverture de l'ouverture de la partie fonctionnelle (16) et s'y appliquant de manière hermétique.

2. Dispositif d'étanchéité selon la revendication 1,
**caractérisé en ce qu'**une deuxième partie fonctionnelle (17) avec une ouverture de partie fonctionnelle associée peut se raccorder hermétiquement au niveau d'un côté de paroi opposé, **en ce que** la bande d'étanchéité élastique (3) peut être apposée sous forme de double joint d'étanchéité avec son évidement longitudinal (5) sur une bride périphérique d'ouverture (4) de l'ouverture de paroi (2), **en ce que** la bande d'étanchéité (3) peut être rabattue dans sa position de montage intermédiaire, **en ce que** la bande d'étanchéité (3), après le montage de la première partie fonctionnelle (16), peut être rabattue dans sa position de montage finale, et **en ce que** la deuxième partie fonctionnelle (17) avec la face périphérique d'ouverture de son ouverture de partie fonctionnelle peut être apposée hermétiquement sur la deuxième branche de serrage (7) et peut être serrée dans la direction de la bride périphérique d'ouverture (4), la première branche de serrage (6) s'appliquant de manière hermétique sur la première partie fonctionnelle (16).

3. Dispositif d'étanchéité selon la revendication 2,
**caractérisé en ce que** le rabattement de la bande d'étanchéité (3) dans sa position de montage finale s'effectue par la deuxième partie fonctionnelle (17) s'appliquant contre la bande d'étanchéité (3) lors du montage.

4. Dispositif d'étanchéité selon l'une quelconque des revendications 1 à 3,
**caractérisé en ce que** la paroi est un tablier (1) d'une carrosserie, et **en ce que** la première partie fonctionnelle (16) est un appareil de climatisation et/ou de chauffage et la deuxième partie fonctionnelle (17) est un filtre à pollen.

5. Dispositif d'étanchéité selon l'une quelconque des revendications 1 à 4,
**caractérisé en ce que** la forme de base de la section transversale de l'évidement longitudinal (5) correspond approximativement à celle d'un triangle équilatéral.

6. Dispositif d'étanchéité selon l'une quelconque des revendications 1 à 5,
**caractérisé en ce que** la première branche de serrage (6) présente une courbure convexe et/ou la deuxième branche de serrage (7) est plane et présente, dans la région de la paroi de liaison (8) un rehaussement en saillie servant de bourrelet d'étanchéité (10) de préférence en liaison avec un épaulement de support (11) situé vers l'intérieur.

7. Dispositif d'étanchéité selon l'une quelconque des revendications 1 à 6,
**caractérisé en ce que** la première branche de serrage (6) présente, sur la transition interne à la paroi de liaison (8), un nez d'encliquetage (12) pour l'établissement de la position de montage intermédiaire.

8. Dispositif d'étanchéité selon l'une quelconque des revendications 1 à 7,
**caractérisé en ce que** la bride périphérique d'ouverture (4) et par conséquent le bord libre (13) de la deuxième branche de serrage (7) sont coudés sous forme de sécurité contre le retrait et l'extrémité libre (14) de la première branche de serrage (6) s'avance jusque dans l'arête coudée (15) de la bride périphérique d'ouverture (4).

9. Dispositif d'étanchéité selon l'une quelconque des revendications 1 à 8,
**caractérisé en ce que** la bande d'étanchéité (3) est fermée sous forme de joint hermétique double pour former un joint hermétique annulaire.

10. Dispositif d'étanchéité selon l'une quelconque des revendications 1 à 9,
**caractérisé en ce que** la bande d'étanchéité (3) est fabriquée en caoutchouc ou en EPDM ou en mousse de caoutchouc.

11. Outil de fabrication d'une bande d'étanchéité (3) selon l'une quelconque des revendications 1 à 10, comprenant un moule d'injection en trois parties (20), avec un noyau (21), une première moitié de moule (22) et une deuxième moitié de moule (23) ainsi qu'avec une première tige d'éjection (24) et une deuxième tige d'éjection (25), le noyau (21) remplissant l'espace interne de l'évidement longitudinal (5) et la fente de serrage (9),
**caractérisé en ce que**
la première moitié de moule (22) forme le côté extérieur de la deuxième branche de serrage (7) et une partie de la paroi de liaison adjacente (8) et peut dans ce cas être ouverte perpendiculairement à la deuxième branche de serrage (7) et à la deuxième moitié de moule (23), **en ce que** la deuxième moitié de moule (23) forme les côtés extérieurs restants de la première branche de serrage (6) et de la paroi de liaison (8), et **en ce qu'**avec la première tige d'éjection (24) montée dans le noyau (21), la deuxième branche de serrage (7) et éventuellement une partie de la paroi de liaison (8), lorsque la première moitié de moule (22) est ouverte, peuvent être rabattues élastiquement d'environ 90° et soulevées de la région du noyau associée et qu'ensuite la première branche de serrage (6) et éventuellement la partie restante de la paroi de liaison (8) avec la deuxième tige d'éjection (25) montée dans la première moitié de moule (22) peut être détachée du noyau (21) approximativement dans le sens opposé au sens d'ouverture.

12. Procédé pour l'introduction d'une bande d'étanchéité (3) entre au moins deux ouvertures le long d'une bride périphérique d'ouverture (4) de l'une des ouvertures,
**caractérisé par** les trois étapes de procédé suivantes :
- mise en place de la bande d'étanchéité (3) sur la bride périphérique d'ouverture (4) de telle sorte que lors d'un positionnement des ouvertures la bande d'étanchéité (3) puisse être maintenue hors d'engagement par rapport aux ouvertures ;
- positionnement des ouvertures les unes par rapport aux autres ;
- engagement de la bande d'étanchéité (3) par rapport aux ouvertures.

13. Procédé selon la revendication 12, **caractérisé en ce que** l'on utilise comme bande d'étanchéité (3) une bande d'étanchéité (3) présentant un nez d'encliquetage (12), de préférence une bande d'étanchéité (3) avec un évidement longitudinal (5) avec un nez d'encliquetage (12) situé vers l'intérieur, et **en ce que** dans la première étape de procédé, la bande d'étanchéité (3) est maintenue hors d'engagement par le nez d'encliquetage (12).

14. Procédé selon la revendication 12 ou la revendication 13,
**caractérisé en ce que** le positionnement de deux ouvertures l'une par rapport à l'autre s'effectue avec un dispositif de positionnement approximativement parallèlement aux faces de l'ouverture.

15. Procédé selon l'une quelconque des revendications 12 à 14,
**caractérisé en ce que** la bande d'étanchéité (3) est utilisée comme double joint hermétique entre trois ouvertures positionnées les unes par rapport aux autres et la troisième étape de procédé est mise en oeuvre par le positionnement de la troisième ouverture.

16. Procédé selon la revendication 15,
**caractérisé en ce que** l'on utilise comme bande d'étanchéité (3) une bande d'étanchéité avec un épaulement de support, de préférence une bande d'étanchéité (3) avec un évidement longitudinal (5) et avec un épaulement de support (11) situé vers l'intérieur, et **en ce que** grâce au positionnement de la troisième ouverture, la bande d'étanchéité (3) avec l'épaulement de support (11) est supportée sur le bord de la première ouverture.

17. Procédé selon l'une quelconque des revendications 12 à 16,
**caractérisé en ce que** les ouvertures sont des ouvertures de passage d'air de composants d'un dispositif de chauffage et/ou de refroidissement et/ou de climatisation d'un véhicule automobile.
